# EUROPEAN PATENT APPLICATION

(11) **EP 0 786 619 A1**
(43) Date of publication of application: **30.07.1997**
(21) Application number: 97300350.2
(22) Date of filing: 20.01.1997
(51) Int. Cl.: F16L 55/10

(54) **Breakaway coupling**

(30) Priority: 25.01.1996 GB 9601423
(71) Applicant: Dover Corporation, New York, NY 10017-1292 (US)
(72) Inventor: Thomson, Jack Gall, West Bridgford, Nottingham NG2 5EB (GB)
(74) Representative: Dealtry, Brian

(57) **Abstract**

A breakaway fluid coupling including first (12) and second coupling halves (16) which are separable from one another in a generally longitudinal axial direction when exposed to a first separating force in excess of a first predetermined force when applied co-axially of the longitudinal axis of the coupling or to a second separating force in excess of a second predetermined force when applied at an inclined angle to said longitudinal axis, the first coupling half including a main body portion and a separate auxiliary body portion mounted on the main body portion to form an axial extension thereof, said second coupling half being axially slidably mounted on said auxiliary body portion (24) and being retained thereon against axial removal by first retention means (47) adapted to permit the second coupling (16) to slide axially off the auxiliary body portion when exposed to said first separating force, the auxiliary body portion being mounted on the main body portion so as to be capable of pivoting relative thereto about an axis perpendicular to said longitudinal axis, the auxiliary body portion being secured in co-axial alignment with said longitudinal axis and retained against axial separation with the main body portion by second retention means (36) adapted to permit the auxiliary body portion to pivot about said axis and separate from the main body portion when exposed to said second separating force.

## Description

The present invention relates to a breakaway coupling, in particular but not exclusively, a breakaway coupling suitable for connecting a fuel nozzle to a hose.

When using a fuel nozzle to fill fuel into the fuel tank of a vehicle, it is possible for the operative to leave the nozzle in the fuel tank inlet and drive away. This can cause the hose to rupture and cause an undesirable spillage of fuel. Subsequently the damaged hose needs to be replaced.

It is desirable to provide a breakaway coupling including a valve such that when the hose is exposed to tensile loadings in excess of a predetermined amount, the breakaway coupling separates and seals off the fuel contained within the hose. It is recognised that the performance of the breakaway coupling should be consistent irrespective of whether the tensile loading is applied axially or obliquely to the axis of the hose.

It is a general aim of the present invention to provide such a breakaway coupling.

According to one aspect of the present invention there is provided a breakaway fluid coupling including first and second coupling halves which are separable from one another in a generally longitudinal axial direction when exposed to a first separating force in excess of a first predetermined force when applied co-axially of the longitudinal axis of the coupling or to a second separating force in excess of a second predetermined force when applied at an inclined angle to said longitudinal axis, the first coupling half including a main body portion and a separate auxiliary body portion mounted on the main body portion to form an axial extension thereof, said second coupling half being axially slidably mounted on said auxiliary body portion and being retained thereon against axial removal by first retention means adapted to permit the second coupling to slide axially off the auxiliary body portion when exposed to said first separating force, the auxiliary body portion being mounted on the main body portion so as to be capable of pivoting relative thereto about an axis perpendicular to said longitudinal axis, the auxiliary body portion being secured in co-axial alignment with said longitudinal axis and retained against axial separation with the main body portion by second retention means adapted to permit the auxiliary body portion to pivot about said axis and separate from the main body portion when exposed to said second separating force.

Preferably the main body portion includes valve means movable between a normally open position and a closed position, the valve means in said open position permitting flow of fluid through the main body portion and in said closed position preventing flow of fluid through the main body portion, valve operating means being provided operatively connected to said first retention means so as to release the valve means for movement from its open to its closed position in the event that the first retention means separates from the auxiliary body portion or the auxiliary body portion separates from the main body portion.

Preferably the first and second retention means are adapted such that said first and second predetermined forces are substantially the same.

In one embodiment the first and/or second retention means includes a plurality of shearable pins.

In another embodiment the first and/or second retention means includes a swaged connection.

Various aspects of the present invention are hereinafter described with reference to the accompanying drawings, in which:-
Figure 1 is a longitudinal axial section through a breakaway coupling according to a first embodiment of the present invention;
Figure 2 is a part longitudinal axial section similar to Figure 1 of a breakaway coupling according to a second embodiment of the present invention.

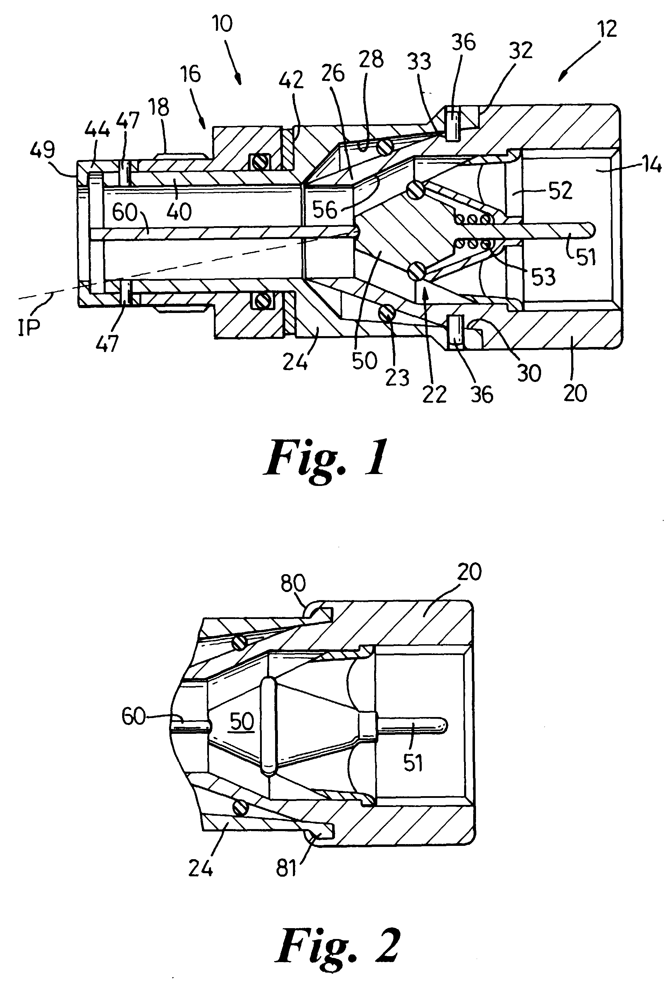

Referring initially to Figure 1 there is shown a breakaway coupling 10 including a first coupling half 12 having an internally screw threaded bore 14 for connection to a hose (not shown). The coupling 10 also includes a second coupling half 16 having an externally screw threaded portion 18 for connection to a fuel nozzle (not shown).

The first coupling half 12 includes a main body portion 20 and an auxiliary body portion 24 which forms an axial extension of the main body portion 20. The main body portion 20 includes the bore 14 and also includes a valve means 22 for controlling flow of fluid through the coupling.

The main body portion 20 includes a generally frusto-conically shaped male portion 26 which is housed within an oversized bore 28 formed in the auxiliary body portion 24. An O-ring seal 23 is located on the male portion 26 to provide a fluid seal between the auxiliary body portion 24 and main body portion 20.

The male portion 26 is axially spaced from a shoulder 32 by an annular seat 30 upon which the marginal portion of bore 28 adjacent to its mouth sits as shown in Figures 1 and 2.

The annular seat 32 acts to co-axially locate the main body portion 20 and auxiliary portion 24.

The annular seat 32 includes an annular groove 33 and the auxiliary body portion 24 includes a series of circumferentially spaced bores each of which contains a shearable pin 36 which projects into the groove 33 and thereby prevents axial separation between the main body portion 20 and the auxiliary portion 24.

The external shape of the annular seat 32 and the male portion 26 and the internal shape and size of the bore 28 are chosen such that the auxiliary portion 24 is able, in the absence of pins 36, to pivot about an axis perpendicular to the longitudinal axis to an inclined position relative to the axis of the main body portion 20 (the maximum inclined position is shown schematically in Figure 1 by the broken line IP).

In use pins 36 serve to resist tensile loadings applied at an inclined angle to the longitudinal axis of the main body 20 say up to 30°. In the event that the tensile loadings applied at an inclined angle exceeds a predetermined amount, the pins 36 shear and enable the auxiliary portion 24 to separate away from the main body portion 20. Accordingly, when this happens, coupling halves 12 and 16 separate.

The auxiliary portion 24 includes a hollow cylindrical portion 40 on which the second coupling half 16 is seated. The coupling half 16 is located on the cylindrical portion 40 so as to be rotatable relative thereto and to also be capable of sliding axially along the cylindrical portion 40.

The coupling half 16 is restrained from moving in one axial direction by a shoulder 42 formed on the auxiliary body portion 24 and a sleeve 44 which is fixedly located on the cylindrical portion 40 by shearable pins 47 which pass through aligned bores formed in the sleeve 44 and cylindrical portion 40.

The number, size and material of pins 47 are chosen such that the pins 47 shear when an axial loading in excess of a predetermined loading is applied co-axially of the coupling. In the event of pins 47 shearing, sleeve 44 and coupling half 16 slide axially off the cylindrical portion 40 and thereby permit separation of coupling halves 12, 16.

The valve means 22 preferably includes a valve spool 50 mounted on a stem 51 which is axially slidably mounted in a spider 52. A spring 53 is provided for biasing the spool 50 in an axial direction toward a valve seat 56 formed internally of the main body portion 20.

A push rod 60 is provided which at one end abuts against the valve spool 50 and at the other end abuts against a spider (not shown) which in turn abuts against an inwardly directed flange 49 of sleeve 44.

As shown in Figure 1 the rod 60 is of a sufficient length to maintain the valve spool 50 away from its seat and thereby keep the valve means 22 open. In the event of the auxiliary portion 24 separating from the main body portion 20, or the sleeve 44 separating from the auxiliary portion 24, the rod 60 is removed and the valve spool 50 is able to move axially to seat upon the valve seat 56 and thereby close the valve means 22.

The above breakaway coupling thereby provides a separate facility for separation caused by loadings applied co-axially and those applied at an inclined angle to the axis of the coupling.

By appropriate choice of number of pins 36 or 47, their sizes and material of construction, it is possible to optimise the coupling such that the loadings required for separating the coupling are substantially the same irrespective of whether the loadings are applied co-axially or at an inclined angle.

In the present example, for a coupling suitable for a 35 mm diameter hose, six equidistantly spaced aluminium pins 36 of ⅛ inch diameter and two diametrically opposed aluminium pins 47 of 3/16 inch diameter have been found to provide a consistent separation for loadings applied either co-axially or up to an inclined angle of 30°.

An alternative embodiment is illustrated in Figure 2 wherein the shearable pins 36 are replaced by an annular swaged skirt 80 formed from the material of the main body portion 20 and which embraces an outwardly directed flange 81 formed on the auxiliary body 24.

## Claims

1. A breakaway fluid coupling including first and second coupling halves which are separable from one another in a generally longitudinal axial direction when exposed to a first separating force in excess of a first predetermined force when applied co-axially of the longitudinal axis of the coupling or to a second separating force in excess of a second predetermined force when applied at an inclined angle to said longitudinal axis, the first coupling half including a main body portion and a separate auxiliary body portion mounted on the main body portion to form an axial extension thereof, said second coupling half being axially slidably mounted on said auxiliary body portion and being retained thereon against axial removal by first retention means adapted to permit the second coupling to slide axially off the auxiliary body portion when exposed to said first separating force, the auxiliary body portion being mounted on the main body portion so as to be capable of pivoting relative thereto about an axis perpendicular to said longitudinal axis, the auxiliary body portion being secured in co-axial alignment with said longitudinal axis and retained against axial separation with the main body portion by second retention means adapted to permit the auxiliary body portion to pivot about said axis and separate from the main body portion when exposed to said second separating force.

2. A breakaway fluid coupling according to Claim 1 wherein the first and second retention means are adapted such that said first and second predetermined forces are substantially the same.

3. A breakaway fluid coupling according to Claim 1 or 2 wherein the main body portion (20) includes a generally frusto-conical male portion (26) housed within an oversized bore (28) formed in said auxiliary body portion (24), seal means (23) being provided to provide a fluid seal between said frusto-conical portion and said bore.

4. A breakaway fluid coupling according to Claim 3 wherein the main body portion (20) includes an annular seat (32) adjacent to said frusto-conical portion (26), said bore (28) adjacent to its mouth having a marginal portion seated upon said annular seat (32).

5. A breakaway coupling according to any preceding claim wherein said auxiliary portion includes a hollow cylindrical portion (40) upon which the second coupling half (16) is rotatably and slidably located, the second coupling half (16) being retained upon the cylindrical portion (40) by said first retention means.

6. A breakaway coupling according to any preceding claim wherein said first retention means includes a plurality of shearable pins (47).

7. A breakaway coupling according to any of Claims 1 to 6 wherein the second retention means includes a plurality of shearable pins (36).

8. A breakaway coupling according to any of Claims 1 to 6 wherein the second retention means includes a swaged connection.

9. A breakaway coupling according to Claim 8 wherein the swaged connection comprises an annular swaged skirt (80) formed from material of the main body portion and which embraces an outwardly directed flange (81) formed on the auxiliary body (24).
